# EUROPEAN PATENT APPLICATION

(11) **EP 3 322 137 A1**
(43) Date of publication of application: **16.05.2018**
(21) Application number: 16821167.0
(22) Date of filing: 09.06.2016
(51) Int. Cl.: H04L 12/70, H04M 11/00, H04W 12/06, H04W 80/10

(54) **SIP CONTROL DEVICE, MOBILE COMMUNICATION SYSTEM, AND COMMUNICATION CONTROL METHOD**

(30) Priority: 07.07.2015 JP 2015136486
(71) Applicant: NTT DOCOMO, INC., Chiyoda-ku Tokyo 100-6150 (JP)
(72) Inventor: ABE, Motohiro, Tokyo 100-6150 (JP); OHASHI, Aki, Tokyo 100-6150 (JP); KANEKO, Mana, Tokyo 100-6150 (JP)
(74) Representative: Hoffmann Eitle
(86) International application number: PCT/JP2016/067235
(87) International publication number: WO 2017/006696

(57) **Abstract**

A SIP control apparatus is provided. The SIP control apparatus is connected to a management apparatus controlling call processing policy in an IP network, and controls a voice call made by a user apparatus. The SIP control apparatus includes a determination unit configured to, in the case where a call connection request is received from the user apparatus, determine whether authentication of the user apparatus has been completed by querying the management apparatus; and a call processing unit configured to, in the case where it is determined that the authentication of the user apparatus has been completed, perform call connection processing without authenticating the user apparatus.

## Description

### BACKGROUND OF THE INVENTION

### 1. Field of the Invention

The present invention relates to a SIP control apparatus, a mobile communication system and a communication control method.

### 2. Description of the Related Art

A mobile communication system is realized by a radio network including a base station apparatus and a core network including a switch. Further, standard specifications of communication methods and communication interfaces are defined by the 3rd Generation Partnership Project (3GPP).

In 3GPP, a technology called IP Multimedia Subsystem (IMS) is defined. The IMS realizes various services provided by a mobile communication network, a fixed network, etc., by using Internet Protocol (IP). The IMS is an independent system, which can be connected to various networks such as a mobile communication network and a fixed network. For example, Voice over LTE (VoLTE) is known as a service provided by having the IMS connected to Evolved Packet Core (EPC).

### [Citation List]

### [Non-Patent Literature]

[NPL 1] 3GPP TS23.228 V13.3.0 (2015-06)

### SUMMARY OF THE INVENTION

### [TECHNICAL PROBLEM]

In the 3GPP standard specifications, in the case where a service using VoLTE is provided, authentication processing is performed when a user apparatus attaches to the EPC, and, further, authentication processing is performed again when the user apparatus accesses the IMS.

However, in the case where the authentication processing performed is completed when a user apparatus attaches to the EPC, the authentication processing performed in the IMS is redundant. In other words, in the current 3GPP standard specifications, the authentication processing for the same user apparatus is performed redundantly, which is not efficient. If the authentication processing performed in the IMS can be omitted, then it is possible to realize reducing connection delay, decreasing processing load, etc.

In view of the above, the present invention has been made. It is an object of the present invention to provide a technology for avoiding duplicated authentication processing in the IMS for a user apparatus which has already been authenticated.

### [SOLUTION TO PROBLEM]

A SIP control apparatus is provided according to an embodiment. The SIP control apparatus is connected to a management apparatus controlling call processing policy in an IP network, and controls a voice call made by a user apparatus. The SIP control apparatus includes a determination unit configured to, in the case where a call connection request is received from the user apparatus, determine whether authentication of the user apparatus has been completed by querying the management apparatus; and a call processing unit configured to, in the case where it is determined that the authentication of the user apparatus has been completed, perform call connection processing without authenticating the user apparatus.

### [ADVANTAGEOUS EFFECTS OF INVENTION]

According to an embodiment, a technology is provided for avoiding duplicated authentication processing in the IMS for a user apparatus which has already been authenticated.

### BRIEF DESCRIPTION OF THE DRAWINGS

Fig. 1 is a drawing illustrating an example of a system configuration of a mobile communication system according to an embodiment.
Fig. 2 is a drawing illustrating an example of a functional structure of an MME according to an embodiment.
Fig. 3 is a drawing illustrating an example of a functional structure of a PCRF according to an embodiment.
Fig. 4 is a drawing illustrating an example of a functional structure of a P-CSCF according to an embodiment.
Fig. 5 is a drawing illustrating an example of a functional structure of a S-CSCF according to an embodiment.
Fig. 6 is a drawing illustrating an example of a hardware configuration of the MME, the PCRF, the P-CSCF, and the S-CSCF according to an embodiment.
Fig. 7 is a sequence diagram illustrating an example of processing steps when a user apparatus attaches to the EPC.
Fig. 8 is a sequence diagram illustrating an example of processing steps when a user apparatus, which has attached to the EPC, accesses the IMS.
Fig. 9 is a drawing illustrating examples of Information Element.

### DETAILED DESCRIPTION OF THE PREFERRED EMBODIMENTS

In the following, referring to the drawings, embodiments of the present invention will be described. It should be noted that the embodiments described below are merely examples and the embodiments to which the present invention is applied are not limited to the following embodiments. For example, it is assumed that a mobile communication system according to an embodiment complies with, but is not limited to, VoLTE. An embodiment may include a system in which the IMS is used by other networks (2G, 3G, GPRS, Wi-Fi (registered trademark), WiMAX (registered trademark), a fixed IP network, etc.). It should be noted that, in the application specification and claims, the term "LTE" is used, not only for meaning a communication method corresponding to 3GPP release 8 or 9, but also for including a communication method corresponding to 3GPP release 10, 11, 12, 13, or later.

### <Overview>

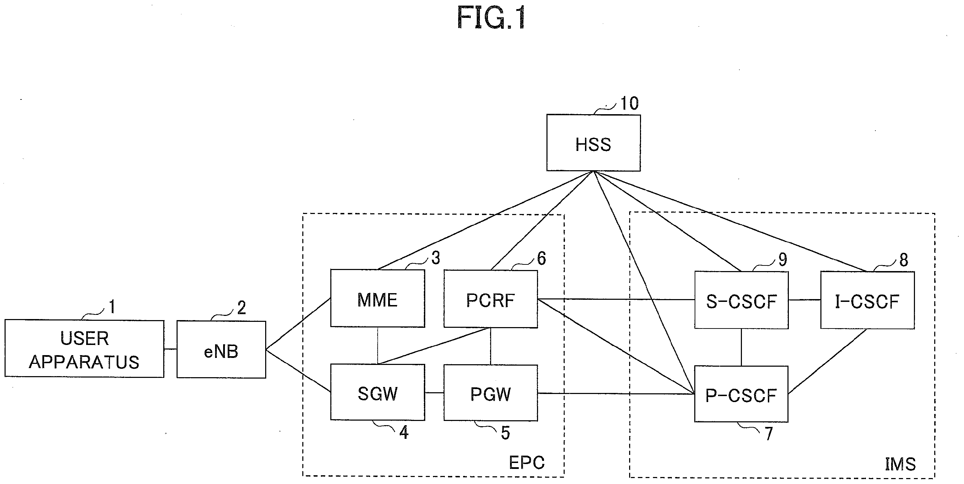

Fig. 1 is a drawing illustrating an example of a system configuration of a mobile communication system according to an embodiment. As illustrated in Fig. 1, the mobile communication system according to an embodiment includes a user apparatus 1, an evolved Node B (eNB) 2, a Mobility Management Entity (MME) 3, a Serving Gateway (SGW) 4, a Packet Data Network Gateway (PGW) 5, a Policy and Charging Rules Function (PCRF) 6, a Proxy-Call Session Control Function (P-CSCF) 7, an Interrogating Call Session Control Function (I-CSCF) 8, a Serving Call Session Control Function (S-CSCF) 9, and a Home Subscriber Server (HSS) 10. The MME 3, the SGW 4, the PGW 5, and the PCRF 6 belong to the EPC. Further, the P-CSCF 7, the I-CSCF 8, and the S-CSCF 9 belong to the IMS. Further, there are two kinds of control protocol options, a GPRS Tunneling Protocol (GTP) and a Proxy Mobile IP (PMIP), between the SGW 4 and the PGW 5. Any one of the GTP and the PMIP may be used. For the sake of illustration convenience, a single user apparatus 1 is included in Fig. 1. Two or more user apparatuses 1 may be included.

The user apparatus 1 has a function for communicating with the eNB 2 and the apparatuses which belong to the EPC or the IMS via radio. The user apparatus 1 may be, for example, a mobile phone, a smartphone, a tablet, a mobile router, a personal computer, a wearable terminal, etc. The user apparatus 1 may be any apparatus as long as it has a communication function.

The eNB 2 is a base station in LTE, and performs communications with the user apparatus 1 via radio. Further, the eNB 2 is directly connected to the MME 3 and the SGW 4, and relays a C-plane signal transmitted and received between the user apparatus 1 and the MME 3, and a U-plane signal transmitted and received between the user apparatus 1 and the SGW 4.

The MME 3 is connected to the eNB 2 and the SGW 4, and provides a mobility control function of the user apparatus 1 and an EPC bearer control function of the SGW 4. The SGW4 is a serving packet switch and relays a U-plane signal between the eNB 2 and the PGW 5. The PGW 5 is a gateway apparatus for the EPC to connect to an external network (to the IMS in an example of Fig. 1) and provides an IP address for the user apparatus 1, etc. The PCRF 6 has a function for controlling policy and charging rules based on Quality of Service (QoS) settings of the EPC bearer, subscriber information, etc. Further, the PCRF 6 has a function for storing various types of user identifiers (an International Mobile Subscriber Identifier (IMSI), a Mobile Station International Subscriber Directory Number (MSISDN), an IP address, an International Mobile Equipment Identity (IMEI), etc.,) for uniquely identifying the user apparatus 1 in order to perform various functions of the PCRF 6.

The P-CSCF 7 is a session initiation protocol (SIP) relay server located at a connection point to the EPC. Further, the P-CSCF 7 has, not only a function for relaying a SIP signal, but also a function for ordering the EPC (especially the PCRF 6) to perform bearer control such as QoS and new bearer settings. The I-CSCF 8 is a first gateway SIP server which is connected to from other networks at the time of mutual connection or roaming. Further, the I-CSCF 8 also has a function for relaying a SIP signal received from the P-CSCF 7 to an appropriate S-CSCF 9. The S-CSCF 9 is a SIP server which has a function for controlling a session for the user apparatus 1 and authenticating the user apparatus 1. It should be noted that, in the 3GPP specifications, it is also possible for the P-CSCF 7 to authenticate the user apparatus 1.

A mobile communication system according to an embodiment operates in such a way that, in the case where authentication performed when attaching the user apparatus 1 to the EPC is completed, authentication processing performed in the IMS will be skipped. With the above arrangement, it is possible to omit the authentication processing performed in the IMS in the case where, for example, VoLTE is provided, and thus, it is possible to realize reducing connection delay, decreasing processing load, etc.

Further, in a mobile communication system according to an embodiment, it is possible for the IMS to be connected to, in addition to the EPC, a network other than the EPC at the same time. With the above arrangement, it is possible for a mobile communication system according to an embodiment to switch operations in such a way that authentication is skipped for a user apparatus 1 which accesses the IMS via the EPC, and that the authentication is performed for a user apparatus 1 which accesses the IMS via a network other than the EPC (e.g., a wireless LAN).

### <Functional structure>

In the following, functional structure examples of the MME 3, the PCRF 6, the P-CSCF 7 and the S-CSCF 9 which perform operations according to an embodiment will be described.

### (MME)

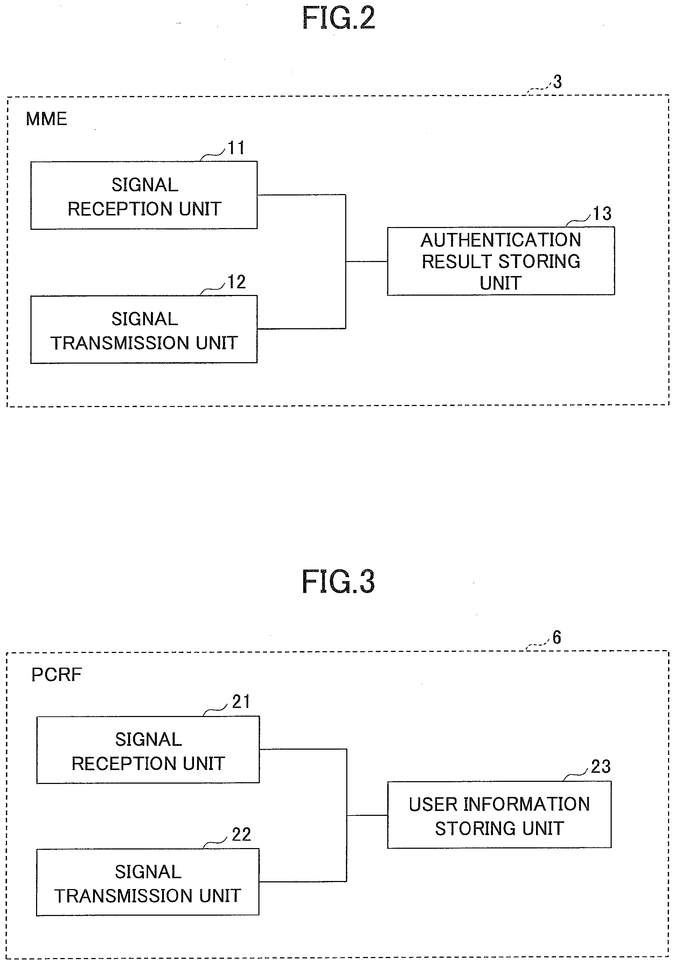

Fig. 2 is a drawing illustrating an example of a functional structure of the MME 3 according to an embodiment. As illustrated in Fig. 2, the MME 3 includes a signal reception unit 11, a signal transmission unit 12, and an authentication result storing unit 13. It should be noted that Fig. 2 only illustrates functional units of the MME 3 especially related to an embodiment, and thus the MME 3 further includes at least functions for performing operations according to LTE (not shown in the figure). Further, a functional structure illustrated in Fig. 2 is merely an example. Functional classification and names of functional units may be anything as long as operations related to an embodiment can be performed.

The signal reception unit 11 and the signal transmission unit 12 have a function for performing transmission and reception of various types of signals (messages) with the user apparatus 1, the eNB 2, the SGW 4, or the HSS 10, and performing necessary call processing. Further, the signal reception unit 11 and the signal transmission unit 12 have a function for authenticating the user apparatus 1 by using an AKA authentication method which will be described later.

The authentication result storing unit 13 has a function for storing information indicating whether the authentication of the user apparatus 1 is completed (or, whether the authentication of the user apparatus 1 is successful). It should be noted that the authentication result storing unit 13 has a function for transmitting the information indicating whether the authentication of the user apparatus 1 has been completed (or, whether the authentication of the user apparatus 1 has been successful) to the signal transmission unit 12 according to a request from the signal transmission unit 12.

### (PCRF)

Fig. 3 is a drawing illustrating an example of a functional structure of the PCRF 6 according to an embodiment. As illustrated in Fig. 3, the PCRF 6 includes a signal reception unit 21, a signal transmission unit 22, and a user information storing unit 23. It should be noted that Fig. 3 only illustrates functional units of the PCRF 6 especially related to an embodiment, and thus the PCRF 6 further includes at least functions for performing operations according to LTE (not shown in the figure). Further, a functional structure illustrated in Fig. 3 is merely an example. Functional classification and names of functional units may be anything as long as operations related to an embodiment can be performed.

The signal reception unit 21 and the signal transmission unit 22 have a function for performing transmission and reception of various types of signals (messages) with the SGW 4, the PGW 5, the P-CSCF 7, or the HSS 10, and performing necessary call processing.

The user information storing unit 23 has a function for storing information related to the user apparatus 1. In the information related to the user apparatus 1, at least a flag indicating that the authentication of the user apparatus 1 has been completed (hereinafter, referred to as "authentication complete flag) and a user identifier corresponding to the authentication complete flag (e.g., IMSI) are included. It should be noted that the authentication complete flag may be referred to as an "Access Permitted" flag.

### (P-CSCF)

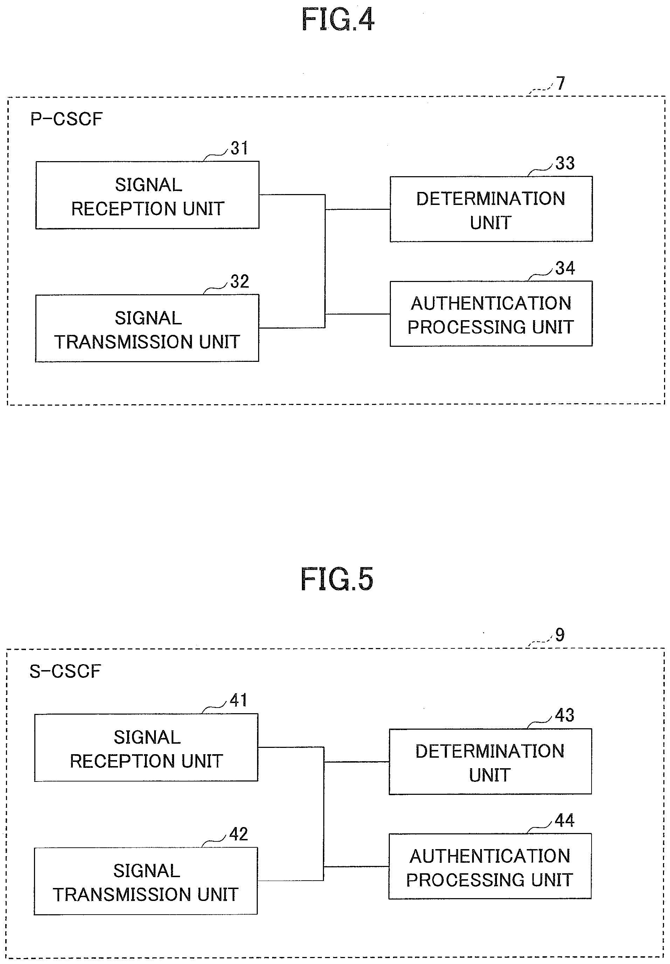

Fig. 4 is a drawing illustrating an example of a functional structure of the P-CSCF 7 according to an embodiment. As illustrated in Fig. 4, the P-CSCF 7 includes a signal reception unit 31, a signal transmission unit 32, a determination unit 33, and an authentication processing unit 34. It should be noted that Fig. 4 only illustrates functional units of the P-CSCF 7 especially related to an embodiment, and thus the P-CSCF 7 further includes at least functions for performing operations according to LTE (not shown in the figure). Further, a functional structure illustrated in Fig. 4 is merely an example. Functional classification and names of functional units may be anything as long as operations related to an embodiment can be performed.

The signal reception unit 31 and the signal transmission unit 32 have a function for performing transmission and reception of various types of signals (messages) with the PGW 5, the PCRF 6, I-CSCF 8, S-CSCF 9, or the HSS 10, and performing call connection processing in the IMS. Further, the signal reception unit 31 and the signal transmission unit 32 have a function for authenticating the user apparatus 1 by using an AKA authentication method which will be described later.

The determination unit 33 has a function for determining whether the authentication of the user apparatus 1 has been completed by querying the PCRF 6 in the case where a call connection request (SIP Register) is received from the user apparatus 1. It should be noted that the determination unit 33 may determine that the authentication of the user apparatus 1 has been completed in the case where the authentication complete flag is included in a signal received from the PCRF 6, and determine that the authentication of the user apparatus 1 has not been completed in the case where the authentication complete flag is not included in the signal received from the PCRF 6.

The authentication processing unit 34 has a function for performing authentication of the user apparatus 1 in the case where the determination unit 33 determines that the authentication of the user apparatus 1 has not been completed.

It should be noted that the signal reception unit 31, the signal transmission unit 32, and the authentication processing unit 34 may be collectively referred to as a call processing unit.

### (S-CSCF)

Fig. 5 is a drawing illustrating an example of a functional structure of the S-CSCF 9 according to an embodiment. As illustrated in Fig. 5, the S-CSCF 9 includes a signal reception unit 41, a signal transmission unit 42, a determination unit 43, and an authentication processing unit 44. It should be noted that Fig. 5 only illustrates functional units of the S-CSCF 9 especially related to an embodiment, and thus the S-CSCF 9 further includes at least functions for performing operations according to LTE (not shown in the figure). Further, a functional structure illustrated in Fig. 5 is merely an example. Functional classification and names of functional units may be anything as long as operations related to an embodiment can be performed.

The signal reception unit 41 and the signal transmission unit 42 have a function for performing transmission and reception of various types of signals (messages) with the PCRF 6, P-CSCF 7, I-CSCF 8, or the HSS 10, and performing call connection processing in the IMS. Further, the signal reception unit 41 and the signal transmission unit 42 have a function for authenticating the user apparatus 1 by using an AKA authentication method which will be described later.

Functions of the determination unit 43 and the authentication unit 44 are the same as the functions of the determination unit 33 and the authentication processing unit 34 of the P-CSCF 7, respectively, and thus, the description will be omitted. It should be noted that the signal reception unit 41, the signal transmission unit 42, and the authentication processing unit 44 may be collectively referred to as a call processing unit.

### <Hardware structure>

Block diagrams (Fig. 2 through Fig. 5) used for describing an embodiment indicate functional unit blocks. These functional blocks (functional units) are realized by an arbitrary combination of hardware and/or software. Further, realizing means of the functional blocks is not specifically limited. In other words, each functional block may be realized by a physically and/or logically coupled single apparatus, or may be realized by multiple apparatuses which are physically and/or logically separated and directly and/or indirectly connected (for example, with a wire and/or wirelessly).

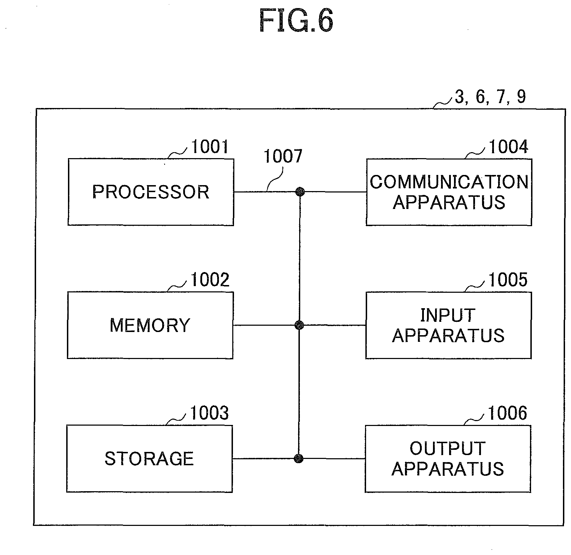

For example, the MME 3, the PCRF 6, the P-CSCF 7, and the S-CSCF 9 according to an embodiment may be realized as computers performing processes of a radio communication method according to an embodiment. Fig. 6 is a drawing illustrating an example of a hardware configuration of the MME 3, the PCRF 6, the P-CSCF 7, and the S-CSCF 9 according to an embodiment. The above MME 3, PCRF 6, P-CSCF 7, and S-CSCF 9 may be physically realized by computer apparatuses including a processor 1001, a memory 1002, a storage 1003, a communication apparatus 1004, an input apparatus 1005, an output apparatus 1006, a bus 1007, etc.

It should be noted that the term "apparatus" in the following description may be read as a circuit, a device, a unit, etc. The hardware configuration of the MME 3, the PCRF 6, the P-CSCF 7, and the S-CSCF 9 may be realized by including one or more apparatuses illustrated in the drawing, or may be realized by not including a part of the apparatuses.

Functions of the MME 3, the PCRF 6, the P-CSCF 7, and the S-CSCF 9 are realized by causing predetermined software (program) to be read to hardware such as the memory 1002, by causing the processor 1001 to perform calculation, and by causing the processor 1001 to control communications by the communication apparatus 1004, and reading and writing data to and from the memory 1002 and the storage 1003.

The processor 1001 controls the entire computer by running the operating system. The processor 1001 may be a Central Processing Unit (CPU) including an interface to a peripheral apparatus, a control apparatus, a calculation apparatus, a register, etc. For example, the signal reception unit 11, the signal transmission unit 12, and the authentication result storing unit 13 of the MME 3, the signal reception unit 21, the signal transmission unit 22, and the user information storing unit 23 of the PCRF 6, the signal reception unit 31, the signal transmission unit 32, the determination unit 33, and the authentication processing unit 34 of the P-CSCF 7, the signal reception unit 41, the signal transmission unit 42, the determination unit 43, and the authentication processing unit 44 of the S-CSCF 9 may be realized by the processor 1001.

Further, the processor 1001 reads programs (program codes), software modules, or data from the storage 1003 and/or the communication apparatus 1004 into the memory 1002, and performs various processes according to the read programs, software modules, or data. The programs are used for causing the computer to perform at least a part of the operations described in an embodiment. For example, the signal reception unit 11, the signal transmission unit 12, and the authentication result storing unit 13 of the MME 3, the signal reception unit 21, the signal transmission unit 22, and the user information storing unit 23 of the PCRF 6, the signal reception unit 31, the signal transmission unit 32, the determination unit 33, and the authentication processing unit 34 of the P-CSCF 7, the signal reception unit 41, the signal transmission unit 42, the determination unit 43, and the authentication processing unit 44 of the S-CSCF 9 may be realized by control programs stored in the memory 1002 and executed by the processor 1001. Other functional blocks may be realized in the similar way. The above processes are described as performed by a single processor 1001. However, the processes may be performed simultaneously or sequentially by two or more processors 1001. The processor 1001 may be implemented by one or more chips. It should be noted that the programs may be transmitted from a network via telecommunication lines.

The memory 1002 is a computer-readable recording medium, and may include, for example, at least one of a Read Only Memory (ROM), an Erasable Programmable ROM (EPROM), an Electrically Erasable Programmable ROM (EEPROM), etc.; and a Random Access Memory (RAM). The memory 1002 may be referred to as a register, a cache, a main memory, etc. The memory 1002 can store programs (program codes), software modules, etc., executable for performing radio communication methods according to an embodiment.

The storage 1003 is a computer-readable recording medium, and may include at least one of an optical disk including a Compact Disc ROM (CD-ROM), a hard disk drive, a flexible disk, a magneto optical disk (e.g., a compact disk, a digital versatile disk, a Blu-ray (registered trademark) disk), a smart card, a flash memory (e.g., a card, a stick, a key drive), a floppy (registered trademark) disk, a magnetic strip, etc. The storage 1003 may be referred to as an auxiliary storage apparatus. The above-described recording medium may be a database, a server, or any other appropriate medium including the memory 1002 and/or the storage 1003.

The communication apparatus 1004 is hardware (transmitting and receiving device) for performing communications between computers via a wired network and/or a wireless network, and may be referred to as, for example, a network device, a network controller, a network card, a communication module, etc. For example, the signal reception unit 11 and the signal transmission 12 of the MME 3, the signal reception unit 21 and the signal transmission 22 of the PCRF 6, the signal reception unit 31 and the signal transmission 32 of the P-CSCF 7, and the signal reception unit 41 and the signal transmission 42 of the S-CSCF 9 may be realized by the communication apparatus 1004.

The input apparatus 1005 is an input device (e.g., a keyboard, a mouse, a microphone, a switch, a button, and a sensor) used for accepting an input from outside. The output apparatus 1006 is an output device (e.g., a display, a speaker, an LED lamp) used for performing an output to outside. It should be noted that the input apparatus 1005 and the output apparatus 1006 may be integrated as a single apparatus (e.g., a touch panel).

Further, apparatuses including the processor 1001 and the memory 1002 are connected to each other by the bus 1007 used for communicating information. The bus 1007 may be a single bus, or may be different buses among the apparatuses.

Further, the MME 3, the PCRF 6, the P-CSCF 7, and the S-CSCF 9 may include hardware such as a microprocessor, a Digital Signal Processor (DSP), an Application Specific Integrated Circuit (ASIC), a Programmable Logic Device (PLD), and a Field Programmable Gate Array (FPGA). A part or all of the functional blocks may be realized by the above hardware. For example, the processor 1001 may be implemented by at least one of the above hardware.

### <Processing steps>

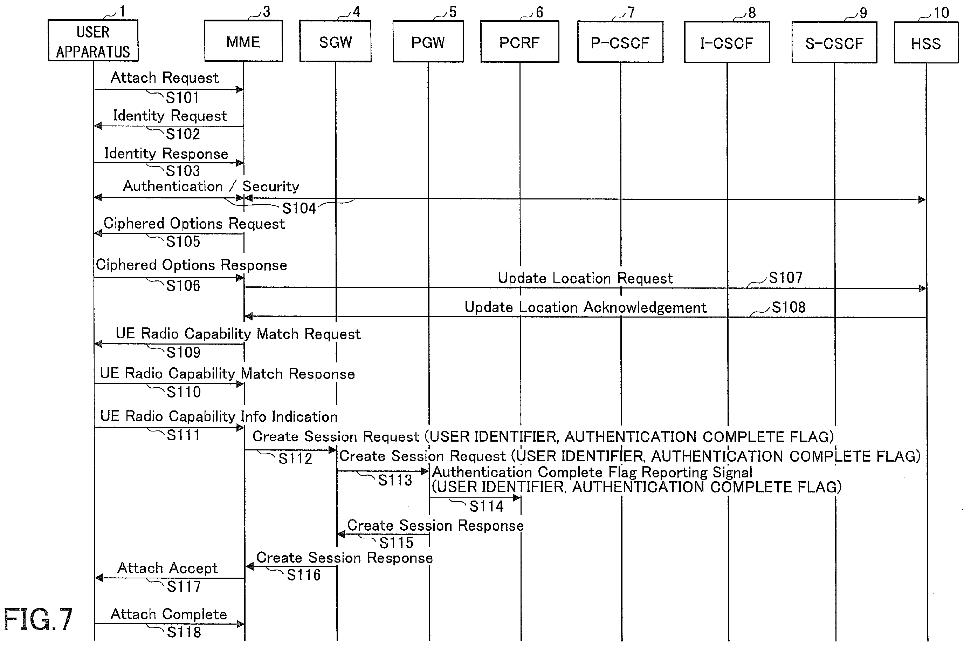

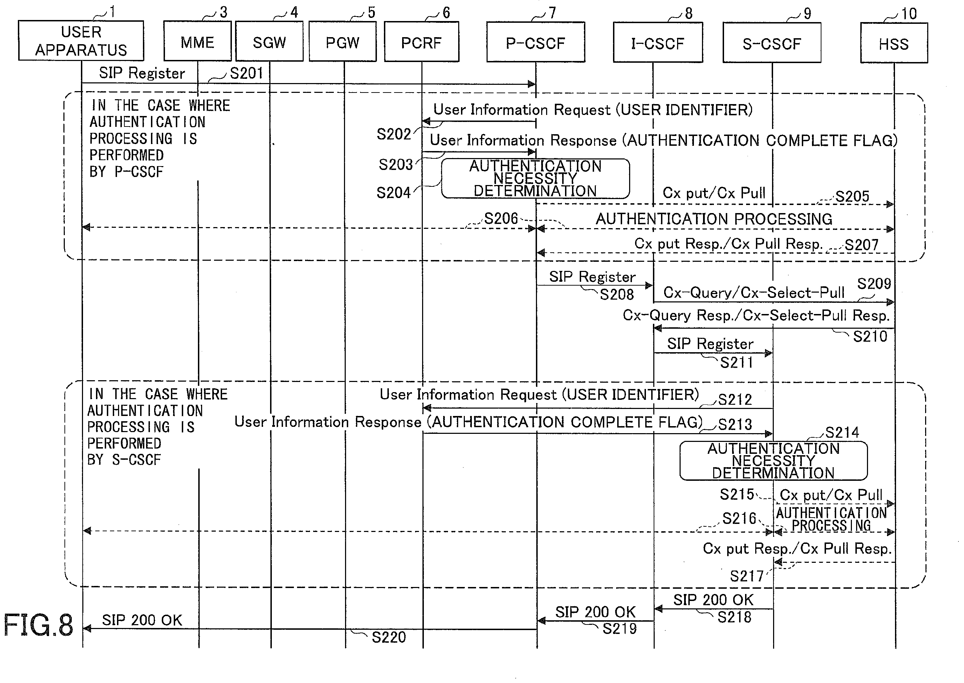

Fig. 7 is a sequence diagram illustrating an example of processing steps when the user apparatus 1 attaches to the EPC. Fig. 8 is a sequence diagram illustrating an example of processing steps when the user apparatus 1, which has attached to the EPC, accesses the IMS. First, referring to Fig. 7, processing steps when the user apparatus 1 attaches to the EPC will be described.

First, the user apparatus 1 transmits an Attach Request to the MME 3 in order to attach to the EPC (S101). Next, the MME 3 transmits an Identity Request to the user apparatus 1 in the case where it is necessary to obtain an IMSI of the user apparatus 1 (S102). The user apparatus 1 transmits an Identity Response to the MME 3 in order to report the IMSI to the MME 3 (S103).

Next, authentication and security key exchange are performed among the user apparatus 1, the MME 3, and the HSS 10 (S104). The MME 3 obtains an Authentication Vector from the HSS 10 and transmits a Random Number (RAND), etc., included in the obtained Authentication Vector to the user apparatus 1. The user apparatus 1 inputs the Random Number, etc., into a Subscriber Identity Module (SIM), and transmits a Response (RES) output from the SIM to the MME 3. The MME 3 performs authentication of the user apparatus 1 by determining whether the RES received from the user apparatus 1 matches an Expected Response (XRES) included in the Authentication Vector, and, at the same time, generates a secret key and an Integrity key. It should be noted that the above authentication method is referred to as an Authentication and Key Agreement (AKA). It should be noted that the authentication result storing unit 13 of the MME 3 stores a result of the authentication of the user apparatus 1.

Next, the MME 3 transmits a Ciphered Options Request to the user apparatus 1 in the case where a Cipher Option Transfer Flag is included in the Attach Request received in step S101 (S105). Next, the user apparatus 1 transmits a Ciphered Option (PCO or APN) to the MME 3 (S106).

Next, the MME 3 transmits an Update Location Request to the HSS 10 in order to report to the HSS 10 various types of identifiers, etc., related to the MME 3 (S107). The HSS 10 transmits an Update Location Acknowledgment to the MME 3 in order to report to the MME 3 that the Update Location Request has been received (S108).

Next, the MME 3 transmits a UE Radio Capability Match Request to the user apparatus 1 in order to check capability of the user apparatus 1 (e.g., whether the user apparatus 1 corresponds to VoLTE)(S109). The user apparatus 1 transmits a UE Radio Capability Match Response and a UE Radio Capability Info Indication to the MME 3 in order to report the capability of the user apparatus 1 (S110, S111).

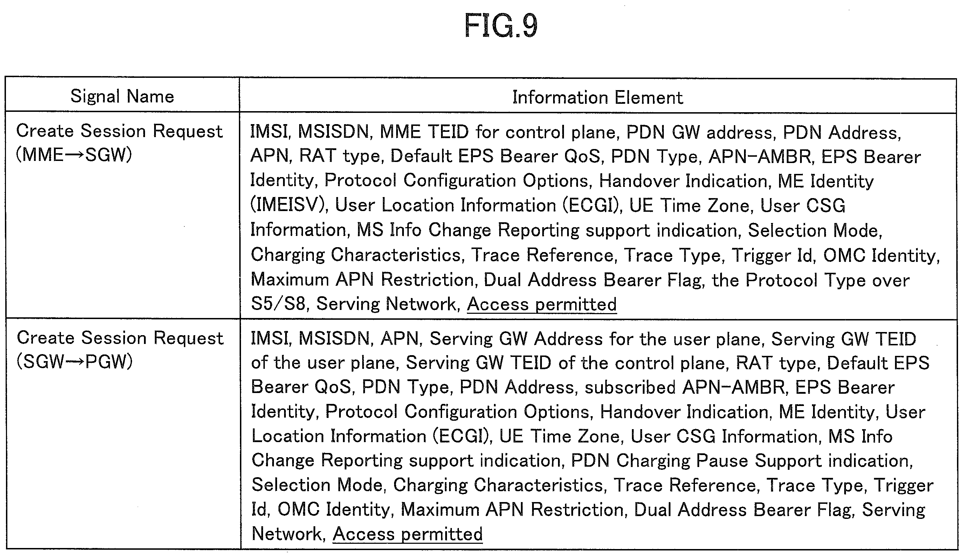

Next, the MME 3 transmits a Create Session Request to the SGW 4 in order to set a bearer between the user apparatus 1 and the IMS (S112). Here, at least a user identifier of the user apparatus 1 and the authentication complete flag are included in the Create Session Request signal. Examples of Information Elements (IEs) included in the Create Session Request are illustrated in Fig. 9. In Fig. 9, the authentication complete flag corresponds to an "Access Permitted".

Next, the SGW 4 transmits the Create Session Request to the PGW 5 (S113). At least a user identifier of the user apparatus 1 and the authentication complete flag are included in the Create Session Request signal. Examples of Information Elements (IEs) included in the Create Session Request are illustrated in Fig. 9. In Fig. 9, the authentication complete flag corresponds to the "Access Permitted".

Next, the PGW 5 transmits an authentication complete flag reporting signal to the PCRF 6. At least a user identifier of the user apparatus 1 and the authentication complete flag are included in the authentication complete flag reporting signal. Next, the user information storing unit 23 of the PCRF 6 associates the user identifier received from the PGW 5 with the authentication complete flag, and stores the associated result. It should be noted that the authentication complete flag reporting signal may be a Diameter signal used for Gx reference point. Further, the authentication complete flag reporting signal may be, for example, an IP-CAN Session Establish signal.

Next, the PGW 5 transmits the Create Session Response to the SGW 4 (S115), and the SGW 4 transmits the Create Session Response to the MME 3 (S116). Next, the MME 3 transmits an Attach Accept to the user apparatus 1 (S117). The user apparatus 1 transmits an Attach Complete to the MME 3 (S118).

As described above, referring to Fig. 7, an example of processing steps when the user apparatus 1 attaches to the EPC has been described. However, the attach time processing steps illustrated in Fig. 7 are merely examples. The processing steps may be different from those illustrated in Fig. 7 as long as the authentication complete flag is reported from the MME 3 to the PCRF 6 according to processing steps of step S112 through step S114. Further, the processing steps of step S112 through step S114 can be applied to processing steps other than the Attach processing steps. For example, in a Tracking Area Update Procedure performed when a location registration area is changed, the Create Session Request is transmitted from the MME 3 to the SGW 4, a Modify Bearer Request is transmitted from the SGW 4 to the PGW 5, and the IP-CAN Session Establish is transmitted from the PGW 5 to the PCRF 6. The above signals may be used for reporting the user identifier and the authentication complete flag from the MME 3 to the PCRF 6.

Next, referring to Fig. 8, processing steps, performed when the user apparatus 1 accesses the IMS and the authentication processing in the IMS is skipped, will be described. It should be noted that, in the IMS, authentication of the user apparatus 1 is performed by any one of the P-CSCF 7 and the S-CSCF 9. Which of the P-CSCF 7 and the S-CSCF 9 is used for performing the authentication is determined according to the operator's policy, existence or non-existence of roaming, etc. In the case where the authentication of the user apparatus 1 is performed by the P-CSCF 7, processing steps excluding step S212 through step S217 in Fig. 8 will be performed. In the case where the authentication of the user apparatus 1 is performed by the S-CSCF 9, processing steps excluding step S202 through step S207 in Fig. 8 will be performed.

First, the user apparatus 1 transmits the SIP Register to the P-CSCF 7 (S201). In the case where the authentication is performed by the P-CSCF 7, the P-CSCF 7 transmits a user information request signal to the PCRF 6 in order to check whether the authentication of the user apparatus 1 has been completed (S202). It should be noted that a user identifier (IMSI, etc.,) is included in the user information request signal.

Next, in the case where an authentication complete flag corresponding to the user identifier received in step S202 is stored in the user information storing unit 23 (that is, in the case where the authentication of the user apparatus 1 has been completed), the PCRF 6 transmits a user information response signal including the authentication complete flag to the P-CSCF 7 (S203). Further, in the case where an authentication complete flag corresponding to the user identifier received in step S202 is not stored in the user information storing unit 23 (that is, in the case where the authentication of the user apparatus 1 has not been completed), the PCRF 6 transmits a user information response signal in which the authentication complete flag is not included to the P-CSCF 7. It should be noted that, in the user information response signal, information indicating whether the authentication of the user apparatus 1 has been completed (e.g., information in which "1" is set in the case where the authentication has been completed, and "0" is set in the case where the authentication has not been completed) instead of the authentication complete flag may be included. It should be noted that the user information request signal and the user information response signal may be a Diameter signal used for an Rx reference point.

Next, the determination unit 33 of the P-CSCF 7 determines whether the authentication of the user apparatus 1 has been completed based on the user information response signal received in step S203 (S204). The determination unit 33 may determine whether the authentication of the user apparatus 1 has been completed based on whether the authentication complete flag is included in the user information response signal.

In the case where the authentication of the user apparatus 1 has been completed, the P-CSCF 7 skips the processing steps of step S205 through step S207, and moves to processing steps of step S208. In the case where the authentication of the user apparatus 1 has not been completed, the P-CSCF 7 authenticates the user apparatus 1 according to the processing steps of step S205 through step S207.

In step S205, the P-CSCF 7 transmits Cx put/Cx Pull to the HSS 10. Next, authentication processing is performed among the user apparatus 1, the P-CSCF 7, and the HSS 10 (S206). An authentication method performed in step S206 is the same as the above-described AKA authentication method. In other words, the authentication processing unit 34 of the P-CSCF 7 authenticates the user apparatus 1 by comparing the RES received from the user apparatus 1 with the XRES included in the Authentication Vector obtained from the HSS 10. Next, the HSS 10 transmits Cx put Response/Cx Pull Response to the P-CSCF 7 (S207).

Next, the P-CSCF 7 transmits the SIP Register to the I-CSCF 8 (S208). The I-CSCF 8 transmits Cx-Query/Cx-Select-Pull to the HSS 10 in order to determine the S-CSCF 9 to which the SIP Register should be transmitted (S209). The HSS 10 transmits to the I-CSCF 8 Cx-Query Response/Cx-Select-Pull Response including information indicating the transfer destination S-CSCF 9 (S210).

Next, the I-CSCF 8 transmits the SIP Register to the S-CSCF 9 indicated in the processing steps of step S210 (S211).

In the case where the authentication is performed by the S-CSCF 9, the S-CSCF 9 transmits a user information request signal to the PCRF 6 in order to check whether the authentication of the user apparatus 1 has been completed (S212). It should be noted that a user identifier (IMSI, etc.,) is included in the user information request signal. Next, in the case where an authentication complete flag corresponding to the user identifier received in step S212 is stored in the user information storing unit 23 (that is, in the case where the authentication of the user apparatus 1 has been completed), the PCRF 6 transmits a user information response signal including the authentication complete flag to the S-CSCF 9 (S213). Further, in the case where an authentication complete flag corresponding to the user identifier received in step S212 is not stored in the user information storing unit 23 (that is, in the case where the authentication of the user apparatus 1 has not been completed), the PCRF 6 transmits a user information response signal in which the authentication complete flag is not included to the S-CSCF 9. It should be noted that, instead of the authentication complete flag, information indicating whether the authentication of the user apparatus 1 has been completed may be included in the user information response signal. It should be noted that the user information request signal and the user information response signal may be a Diameter signal used for an Rx reference point.

Next, the determination unit 43 of the S-CSCF 9 determines whether the authentication of the user apparatus 1 has been completed based on the user information response signal received in step S213 (S214). The determination unit 43 may determine whether the authentication of the user apparatus 1 has been completed based on whether the authentication complete flag is included in the user information response signal.

In the case where the authentication of the user apparatus 1 has been completed, the S-CSCF 9 skips the processing steps of step S215 through step S217, and moves to processing steps of step S218. In the case where the authentication of the user apparatus 1 has not been completed, the S-CSCF 9 performs the authentication of the user apparatus 1 according to the processing steps of step S215 through step S217.

In step S215, the S-CSCF 9 transmits Cx put/Cx Pull to the HSS 10. Next, authentication processing is performed among the user apparatus 1, the S-CSCF 9, and the HSS 10 (S216). An authentication method performed in step S216 is the same as the above-described AKA authentication method. In other words, the authentication processing unit 44 of the S-CSCF 9 authenticates the user apparatus 1 by comparing the RES received from the user apparatus 1 with the XRES included in the Authentication Vector obtained from the HSS 10. Next, the HSS 10 transmits Cx put Response/Cx Pull Response to the S-CSCF 9 (S217).

Next, SIP 200 OK is transmitted from the S-CSCF 9 to the user apparatus 1 (S218, S219, S220), and the user apparatus 1 is registered in the IMS.

As described above, referring to Fig. 8, processing steps, performed when the user apparatus 1 accesses the IMS and the authentication processing in the IMS is skipped, have been described.

According to the processing steps described referring to Fig. 7 and Fig. 8, in the case where authentication performed when the user apparatus 1 attaches to the EPC has been completed, authentication processing in the IMS is skipped. With the above arrangement, it is possible to omit the authentication processing in the IMS in the case where, for example, VoLTE is provided, and thus, it is possible to realize reducing connection delay, decreasing processing load, etc.

### <Summary>

As described above, according to an embodiment, a SIP control apparatus is provided. The SIP control apparatus is connected to a management apparatus controlling call processing rules in an IP network, and controls a voice call made by a user apparatus. The SIP control apparatus includes a determination unit configured to, in the case where a call connection request is received from the user apparatus, determine whether authentication of the user apparatus has been completed by querying the management apparatus; and a call processing unit configured to, in the case where it is determined that the authentication of the user apparatus has been completed, perform call connection processing without authenticating the user apparatus. With the above SIP control apparatus, in the IMS, a technology is provided for avoiding duplicated authentication processing for a user apparatus which has already been authenticated.

Further, the determination unit 33 may determine that the authentication of the user apparatus 1 has been completed in the case where a predetermined flag is included in a signal received from the management apparatus, and determine that the authentication of the user apparatus 1 has not been completed in the case where the predetermined flag is not included in the signal received from the management apparatus. With the above arrangement, the P-CSCF 7 or the S-CSCF 9 only needs to check existence of a predetermined flag (authentication complete flag) in order to determine whether the user apparatus 1 has been authenticated, and thus, the determination is easier.

Further, according to an embodiment, a mobile communication system is provided. The mobile communication system includes a management apparatus which controls call processing rules in an IP network, a switch, and a SIP control apparatus which controls a voice call made by a user apparatus. The switch includes a reporting unit configured to, in the case where authentication of the user apparatus is completed, report to the management apparatus that the authentication is completed. The SIP control apparatus includes a determination unit configured to, in the case where a call connection request is received from the user apparatus, determine whether the authentication of the user apparatus has been completed by querying the management apparatus, and a call processing unit configured to, in the case where it is determined that the authentication of the user apparatus has been completed, perform call connection processing without authenticating the user apparatus. With the above mobile communication system, in the IMS, a technology is provided for avoiding duplicated authentication processing for a user apparatus which has already been authenticated.

Further, according to an embodiment, a communication control method is provided. The communication control method is performed by a SIP control apparatus which is connected to a management apparatus controlling call processing rules in an IP packet network, and controls a voice call made by a user apparatus. The communication control method includes a step of, in the case where a call connection request is received from the user apparatus, determining whether authentication of the user apparatus has been completed by querying the management apparatus; and a step of, in the case where it is determined that the authentication of the user apparatus has been completed, performing call connection processing without authenticating the user apparatus. With the above communication method, in the IMS, a technology is provided for avoiding duplicated authentication processing for a user apparatus which has already been authenticated.

### <Supplementary description of embodiment>

As described above, each of the apparatuses according to an embodiment (user apparatus 1/MME 3/SGW 4/PGW 5/PCRF 6/P-CSCF 7/I-CSCF 8/S-CSCF 9/HSS 10) may be realized by an apparatus including a CPU and a memory and by having a program executed by the CPU (processor), may be realized by hardware such as a hardware circuit which includes a processing logic described in an embodiment, or may be realized by a mixture of a program and hardware.

As described above, embodiments have been described. The disclosed invention is not limited to these embodiments, and a person skilled in the art would understand various variations, modifications, replacements, or the like. Specific examples of numerical values have been used for encouraging understanding of the present invention. These numeric values are merely examples and, unless otherwise noted, any appropriate values may be used. In the above description, partitioning of items is not essential to the present invention. Matters described in more than two items may be combined if necessary. Matters described in one item may be applied to matters described in another item (as long as they do not conflict). In a functional block diagram, boundaries of functional units or processing units do not necessarily correspond to physical boundaries of parts. Operations of multiple functional units may be physically performed in a single part, or operations of a single functional unit may be physically performed by multiple parts. The order of steps in the above described sequences and flowcharts according to an embodiment may be changed as long as there is no contradiction. For the sake of process description convenience, the MME 3, the PCRF 6, the P-CSCF 7, and the S-CSCF 9 have been described using functional block diagrams. These apparatuses may be implemented by hardware, by software, or by combination of both. The software which is executed by a processor included in a the MME 3, the PCRF 6, the P-CSCF 7, or the S-CSCF 9 may be stored in a random access memory (RAM), a flash memory, a read-only memory (ROM), an EPROM, an EEPROM, a register, a hard disk drive (HDD), a removable disk, a CD-ROM, a database, a server, or any other appropriate recording medium.

It should be noted that, in an embodiment, the RCRF 6 is an example of the management apparatus. The P-CSCF 7 or the S-CSCF 9 is an example of the SIP control apparatus. The authentication complete flag is an example of the predetermined flag. The SIP Register is an example of the call connection request.

The present application is based on and claims the benefit of priority of Japanese Priority Application No. 2015-136486 filed on July 7, 2015, the entire contents of which are hereby incorporated by reference.

### [DESCRIPTION OF THE REFERENCE NUMERALS]

- 1: User apparatus
- 2: eNB
- 3: MME
- 4: SGW
- 5: PGW
- 6: PCRF
- 7: P-CSCF
- 8: I-CSCF
- 9: S-CSCF
- 10: HSS
- 11, 21, 31, 41: Signal reception unit
- 12, 22, 32, 42: Signal transmission unit
- 13: Authentication result storing unit
- 23: User information storing unit
- 33, 43: Determination unit
- 34, 44: Authentication processing unit
- 1001: Processor
- 1002: Memory
- 1003: Storage
- 1004: Communication apparatus
- 1005: Input apparatus
- 1006: Output apparatus

## Claims

1. A SIP control apparatus which is connected to a management apparatus controlling call processing policy in an IP network, and controls a voice call made by a user apparatus, the SIP control apparatus comprising:
a determination unit configured to, in the case where a call connection request is received from the user apparatus, determine whether authentication of the user apparatus has been completed by querying the management apparatus; and
a call processing unit configured to, in the case where it is determined that the authentication of the user apparatus has been completed, perform call connection processing without authenticating the user apparatus.

2. The SIP control apparatus according to claim 1, wherein the determination unit determines that the authentication of the user apparatus has been completed in the case where a predetermined flag is included in a signal received from the management apparatus, and determines that the authentication of the user apparatus has not been completed in the case where the predetermined flag is not included in the signal received from the management apparatus.

3. A mobile communication system comprising: a management apparatus which controls call processing policy in an IP network; a switch; and a SIP control apparatus which controls a voice call made by a user apparatus, wherein the switch includes
a reporting unit configured to, in the case where authentication of the user apparatus is completed, report to the management apparatus that the authentication is completed, and the SIP control apparatus includes
a determination unit configured to, in the case where a call connection request is received from the user apparatus, determine whether authentication of the user apparatus has been completed by querying the management apparatus; and
a call processing unit configured to, in the case where it is determined that the authentication of the user apparatus has been completed, perform call connection processing without authenticating the user apparatus.

4. A communication control method performed by a SIP control apparatus which is connected to a management apparatus controlling call processing policy in an IP packet network, and controls a voice call made by a user apparatus, the communication control method comprising:
a step of, in the case where a call connection request is received from the user apparatus, determining whether authentication of the user apparatus has been completed by querying the management apparatus; and
a step of, in the case where it is determined that the authentication of the user apparatus has been completed, performing call connection processing without authenticating the user apparatus.
